(19) Europäisches Patentamt
European Patent Office
Office européen des brevets

(11) **EP 0 461 214 B1**

(12) **EUROPEAN PATENT SPECIFICATION**

(45) Date of publication and mention of the grant of the patent:
**06.08.1997 Bulletin 1997/32**

(51) Int Cl.[6]: **G06F 7/38**

(86) International application number:
**PCT/US90/06532**

(21) Application number: **90917368.4**

(22) Date of filing: **13.11.1990**

(87) International publication number:
**WO 91/10187 (11.07.1991 Gazette 1991/15)**

(54) **METHOD AND APPARATUS FOR HIGH SPEED DETERMINATION OF Jth ROOTS AND RECIPROCALS OF Jth ROOTS**

HOCHGESCHWINDIGKEITSVERFAHREN UND -GERÄT ZUR BESTIMMUNG VON J-TEN WURZELN UND REZIPROKWERTEN VON J-TEN WURZELN

PROCEDE ET SYSTEME DE DETERMINATION A HAUTE VITESSE DE RACINES Jième ET DES INVERSES DES RACINES Jième

(84) Designated Contracting States:
**DE FR GB**

(30) Priority: **29.12.1989 US 459041**

(43) Date of publication of application:
**18.12.1991 Bulletin 1991/51**

(73) Proprietor: **MOTOROLA, INC.**
**Schaumburg, IL 60196 (US)**

(72) Inventor: **LINDSLEY, Brett, Louis**
**Buffalo Grove, Illinois 60089 (US)**

(74) Representative: **Dunlop, Hugh Christopher et al**
**Motorola,**
**European Intellectual Property,**
**Midpoint,**
**Alencon Link**
**Basingstoke, Hampshire RG21 7PL (GB)**

(56) References cited:
**US-A- 4 607 343**

- **IBM TECHNICAL DISCLOSURE BULLETIN, vol. 10, no. 5, October 1967, New York, US, pp 572-575; D. SENZIG: 'High-Speed Division Algorithm'**
- **IEEE TRANSACTIONS ON COMPUTERS vol. C-20, no. 4, April 1971, New York, US, pp 470-472; E. KRISHNAMURTHY: 'Economical Iterative and Range-Transformation Schemes for Division'**
- **R. RICHARDS 'Arithmetic operations in digital computers' 1955, Van Nostrand, New York, USA, pp 291-295**
- **ELECTRONICS vol. 46, no. 7, 29 March 1973, New York, US, pp 92-93; L. MATTERA: 'More computation shortcuts with pocket calculators'**
- **IBM Technical Disclosure Bulletin, vol. 22, November 4, issued September 1979, R.L. HO: "Approximating Divisions By A Constant", pp 1554-1557**
- **WEITEK Application Note, published 1983 (WEOTEK Corporation: Santa Clara, California, USA), "WTL 1032/1033 Floating Point Division/Square Root/IEEE Arithmetic"**

# EP 0 461 214 B1

## Description

The invention relates to a method and apparatus for high speed determination of $J^{th}$ roots and reciprocals of $J^{th}$ roots.

## Background Of The Invention

IBM Technical Disclosure Bulletin, Vol. 10, no. 5, October 1967, NEW YORK US, pages 572-575, D. Senzig, 'High Speed Division Algorithm' discusses an algorithm for division with a third or fourth order convergence rate. Initially numeric processors computed division and square root determination utilizing a remainder method. This method was inefficient in comparison with remainderless division and square root determination based upon the Newton-Raphson algorithm or simple cases of convergence algorithms. The Newton-Raphson algorithm is an additive convergence algorithm applied to divide and square root approximations. An approach to solve the $11^{th}$ root algorithm is also disclosed in Electronics, vol.46, No.7, March 29, 1973, pages 92-93. A unified method of developing convergence algorithms applicable to higher convergence rates has not heretofore been developed.

There is a need for formulation of convergence algorithms applicable to higher convergence rates so as to improve efficiency in mathematical computations of $j^{th}$ roots.

## Summary Of The Invention

This need for improved efficiency in mathematical computations of $j^{th}$ roots, utilizing a convergence algorithm formulated so as to be applicable to a selected convergence rate, including higher order convergence rates, is substantially met by the present invention. A numeric processor (NP), and method as defined in independent claims 1 and 6, respectively, are set forth that generates convergence polynomials relative to desired convergence rates such that reciprocal $j^{th}$ roots of inputs may be more efficiently computed.

Underlying the concept of the present invention is the following rationale: recognizing that if, for a given input x, x * $f^j$ = 1, then f = $x^{-1/j}$. If f is represented as a series of factors, for example f = $f_1 * f_2 * f_3$, then x*$(f_1 * f_2 * f_3)^j$ = 1, and it follows that x * $[(f_1)^j * (f_2)^j * (f_3)^j]$ = 1 and $f_1 * f_2 * f_3 = x^{-1/j}$. Thus, driving x toward 1.0 may occur in multiple steps. In general, f is a function of x.

Responsive to input values for a desired $j^{th}$ root and a desired convergence rate of a selected input value, a NP determines a reciprocal of an approximate such root, in one embodiment obtaining the approximate such root from a read-only memory device. After raising the reciprocal of the approximate root to the $j^{th}$ power and multiplying same by the selected input value to obtain a near unity value, the NP determines a convergence factor relative to the following three values: the desired convergence rate, the desired $j^{th}$ root, and the near unity value. The convergence factor is determined as an approximate solution $f_j[m](x)$ of an error equation x * $\{f_j[m](x)\}^j$ = 1 - $\Delta^m$, where x is a near unity value, j represents a desired $j^{th}$ root, m is a desired convergence rate, $f_j[m](x)$ is an $m$-$1^{th}$ order polynomial in terms of x that when raised to the $j^{th}$ power and multiplied by x causes an error $\Delta$ to decrease by the $m^{th}$ power, and $\Delta$ is 1 - x.

Determination of $f_j[m](x)$ is as follows: 1 - $\Delta$ is substituted for x in the error equation; $f_j[m](x)$ is taken to be $f_j[m](\Delta)$, where $f_j[m](\Delta)$ = 1 + $A_1\Delta^1$ + $A_2\Delta^2$ + $A_3\Delta^3$ +... $A_{m-1}\Delta^{m-1}$, having coefficients $A_1$ through and including $A_{m-1}$; 0 < 1 - $\Delta$ < 2; $\{f_j[m](x)\}^j$ is expanded and multiplied by (1 - $\Delta$) as indicated; all terms that contain $\Delta^P$ such that p > m are eliminated, obtaining an equation with coefficients $g_1$ through $g_m$ of the form 1 + $g_1\Delta^1$ + $g_2\Delta^2$ + $g_3\Delta^3$ ... +$g_m\Delta^m$ = 1 - $k\Delta^m$ ; the coefficients of terms $\Delta^1$, $\Delta^2$, $\Delta^3$,...,$\Delta^{m-1}$ are equated to zero, yielding solutions for the $A_1$ through $A_{m-1}$ coefficients above; (1 - x) is substituted for $\Delta$ to obtain the convergence factor $f_j[m](x)$ = 1 + $K_1x$ + $K_2x^2$ + $K_3x^3$...+$K_{m-1} x^{m-1}$, having coefficients $K_1$ through and including $K_{m-1}$, where the $K_1$-$K_{m-1}$ coefficients are functions of the $A_1$-$A_{m-1}$ coefficients.

The NP raises the convergence factor to the $j^{th}$ power and multiplies by x to obtain a new value for x. The NP multiplies the approximate reciprocal $j^{th}$ root of the selected input by the convergence factor, determining a new approximation of an approximate reciprocal $j^{th}$ root. The steps of determining a convergence factor through and including determining a new approximation of a reciprocal $j^{th}$ root of a selected input are iterated until a solution with a desired degree of accuracy is obtained. The repeated iterations drive x toward 1 and the product of the convergence factors toward the reciprocal $j^{th}$ root, i.e., x * $\{f_i(m)(x)\}^j \Rightarrow 1$ and $\pi \{f_j[m](x)\} \Rightarrow 1/(j^{th \; root}$ of x).

It will be obvious to one skilled in the art that the approximate $j^{th}$ root of the selected input may be obtained readily from the approximate reciprocal $j^{th}$ root, for example, utilizing $S^{1/j} = (S^{-1/j})^{j-1} * S$ or $(S^{-1/j})^{-1}$.

## Brief Description Of The Drawings

Figure 1 is a general flow chart of an implementation of the invention incorporating an application of an approximation strategy.

Figure 2 is a block diagram of a computer hardware implementation of the invention.

Best Mode For Carrying Out The Invention

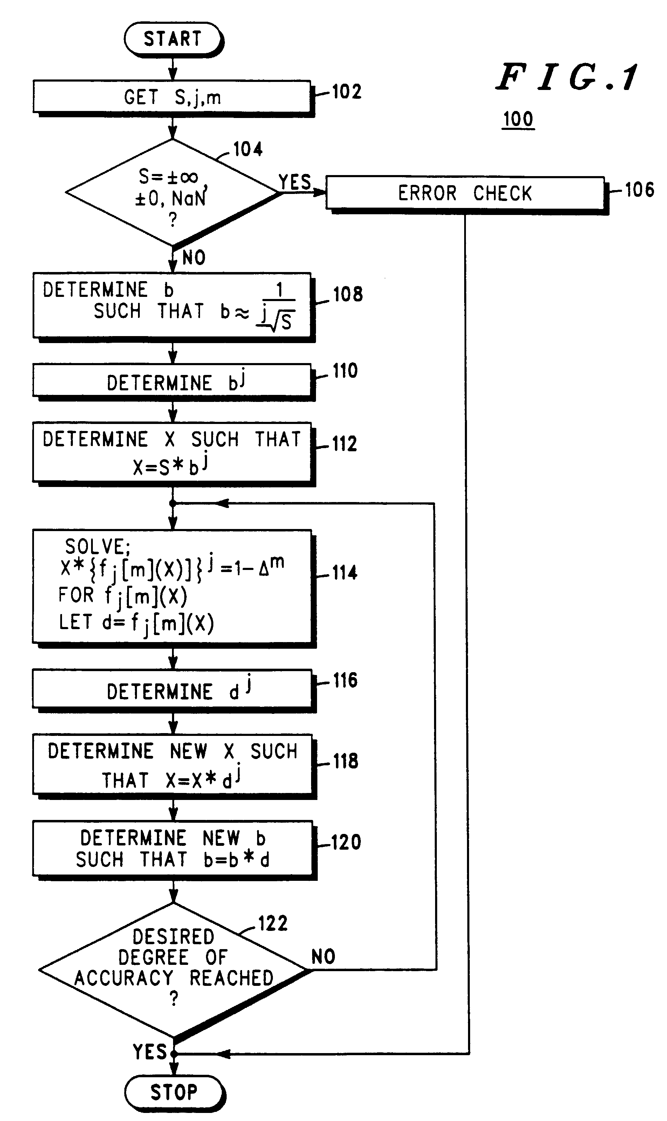

FIG. 1, generally depicted by the numeral 100, illustrates one embodiment of steps executed by a numeric processor (NP) incorporating the present invention. An error equation is expanded and solved through strategic elimination of selective terms, together with assignment of a zero value to appropriate coefficients, providing a convergence factor that is implemented iterably to determine a reciprocal of a desired root of an input value until a solution with a desired degree of accuracy is obtained.

The NP, utilizing at least one electrical signal, provides an input value of S, an input value m reflecting a desired convergence rate, and an input value j reflecting a desired $j^{th}$ root (102). The NP utilizes at least one electrical signal to determine if $S = \pm \infty$, $\pm 0$, or Not-a-Number (NaN) (104). If $S = \pm \infty$, $\pm 0$, or NaN, NP utilizes an error check device (106), and stops processing. It is apparent that the order of input data may be varied, it only being necessary that the S value be input prior to the NP's check on whether $S = \pm \infty$, $\pm 0$, or NaN. If S is other than $\pm \infty$, $\pm 0$, or NaN, the NP utilizes at least one electrical signal to determine a value b such that b is an approximation to the reciprocal of the $j^{th}$ root of S (108). Then the NP employs at least one electrical signal to determine b to the $j^{th}$ power (110). Next, the NP utilizes at least one electrical signal to determine a value of x such that $x = S * b^j$, wherein $0 < x < 2$, x being substantially close to 1.0 (112).

The NP then employs at least one electrical signal to manipulate an error equation, $x * \{f_j[m](x)\}^j = 1 - \Delta^m$, wherein $f_j[m](x) = 1 + A_1 x + A_2 x^2 + A_3 x^3 ... + A_{m-1} x^{m-1}$, having coefficients $A_1$ through and including $A_{m-1}$, and $\Delta = 1 - x$, $\Delta$ being error, and achieve a value for $f_j[m](x)$, thereafter referred to as d, in the following manner: $f_j[m](x)$ is an $m-1^{th}$ polynomial in $\Delta$ that is expanded by being raised to the $j^{th}$ power and multiplied by $(1 - \Delta)$ as indicated to obtain an equation of the form $1 + g_1 \Delta^1 + g_2 \Delta^2 + g_3 \Delta^3 ... + g_m \Delta^m = 1 - k\Delta^m$, having coefficients $g_1$ through and including $g_m$; the coefficients $g_1$ through and including $g_{m-1}$ are equated to zero and all terms that contain $\Delta^p$ such that $p > m$ are eliminated such that solutions for $A_1$ through and including $A_{m-1}$ are obtained;

$(1 - x)$ is substituted for $\Delta$ to obtain an equation of the form $f_j[m](x) = 1 + K_1 x + K_2 x^2 + K_3 x^3 ... + K_{m-1} x^{m-1}$, having coefficients $K_1$ through and including $K_{m-1}$ such that the $K_1 - K_{m-1}$ coefficients are functions of the $A_1 - A_{m-1}$ coefficients, that is referred to as d and is utilized as a convergence factor (114). The NP employs at least one electrical signal to raise d to the $j^{th}$ power (116), then to determine a new x such that $x = x * d^j$ (118). Next the NP utilizes at least one electrical signal to determine a new b such that $b = b * d$ (120) and such that b appears as an electrical output signal.

The steps of the immediately preceding paragraph are iterated until a solution with a desired degree of accuracy is obtained (122), at which time the NP stops. The degree of accuracy may be determined by how close x is to 1.0, or equivalently, how close $\Delta$ is to zero.

When j is unknown or fixed, then $\{f_j[m](x)\}^j$ may be expanded using the binomial theorem, utilizing only the first m terms of a series generated by that theorem.

For example, for quadratic convergent reciprocal square root, wherein $m = 2$ and $j = 2$, the following steps derive $f_2[2](x)$ according to the present invention:

1. The error equation is

$$(1 - \Delta)\{f_j[m](\Delta)\}^j \approx 1 - \Delta^m$$

$$(1 - \Delta)\{f_2[2](\Delta)\}^2 \approx 1 - \Delta^2$$

$$(1 - \Delta)(1 + A_1\Delta)^2 \approx 1 - \Delta^2$$

2. Expand the error equation eliminating terms containing
$\Delta^p$ such that $p > 2$, obtaining $\Delta^p$ terms with coefficients related to the A coefficients:

$$(1 - \Delta)(1 + 2A_1\Delta + \Delta^2) \approx 1 - \Delta^2$$

$$1 + \Delta(2A_1 - 1) + \Delta^2(1 - 2A_1) \approx 1 - \Delta^2$$

3. Set the coefficient of the $\Delta$ term to zero, and solve for $A_1$:

$$2A_1 - 1 = 0$$

$$A_1 = 1/2$$

4. Substitute the value obtained for $A_1$ into $f_2[2](\Delta) = 1 + A_1\Delta$, and relate solution to x:

$$f_2[2](\Delta) = 1 + (1/2)\Delta$$

Since

$$x = 1 - \Delta, \ f_2[2](x) = 1.5 - 0.5x$$

The algorithm for the reciprocal square root is then:
For an input of magnitude S,
Initialize:

$$f \approx 1/(S)^{1/2}$$

$$\text{Let } x = S * f^2$$

$$\text{Let } b = f$$

Iterate:

$$d = 1.5 - 0.5x$$

$$x = x * d^2$$

$$b = b * d$$

Terminate:

$$1/(S)^{1/2} = b$$

The method of the invention, being the first such method known to the inventor to construct a general approach applicable even to solution of higher order roots, is designated "Lindsley's Law."

It will be apparent to those skilled in the art that the reciprocal of the $j^{th}$ root of an input may be utilized to obtain the $j^{th}$ root of that input.

Additionally, it will be apparent to those skilled in the art that if j and m are selected as constants, the polynomial $f_j[m](x)$ will be dictated by j and m, and may be determined at a suitable time. The method of the invention may then proceed to utilize the determined polynomial as necessary without redetermination during the implementation of the preselected j and m constants.

Further, it will be apparent that error($\Delta$) decreases by the square for each iteration in quadratic convergence where m = 2, by the cube for each iteration in cubic convergence where m = 3, and so on in this related manner.

In an implementation of the present invention in which convergent reciprocal such that j = 1 is desired, an application useful for division algorithms in addition to other uses, it is apparent that non-zero terms of $f_j[m](x)$ are approximated to give

$$d = f_j[m](x) =$$

$$1 + (1/j)[(1 - x)^1 + (1 - x)^2 + (1 - x)^3 \ldots + (1 - x)^{m-1}],$$

with $j = 1$, that may be simplified to:

$$d = f_1[1](x) = 1$$

$$d = f_1[2](x) = 2 - x$$

$$d = f_1[3](x) = 3 - 3x + x^2$$

$$d = f_1[4](x) = 4 - 6x + 4x^2 - x^3$$

$$d = f_1[5](x) = 5 - 10x + 10x^2 - 5x^3 + x^4 \ldots$$

and

$$d = f_1[m](x) = 1 + (1 - x)^1 + (1 - x)^2 + (1 - x)^3 \ldots + (1 - x)^{m-1}$$

for different selected convergence rates.

In another implementation of the present invention in which convergent reciprocal square root such that $j = 2$ is desired, an application useful for square root algorithms in addition to other uses, it is apparent that non-zero terms of $f_j[m](x)$ are approximated to give

$$d = f_j[m](x) = 1 + (1 - x)^1 (1/j) + (1 - x)^2 [(1/j) - (j-1)/(2j^2)]$$

$$+ (1 - x)^3 [(1/j) - (j-1)/(2j^2) - (j-1)/(2j^3)]$$

$$+ (1 - x)^4 [(1/j) - (j-1)/(2j^2) - (j-1)/(2j^3) - (j-1)/(2j^4)]$$

$$+ \ldots$$

$$+ (1 - x)^{m-1} [(1/j) - (j-1)/(2j^2) - (j-1)/(2j^3) \ldots - (j-1)/(2j^{m-1})]$$

with $j = 2$, which may be simplified to:

$$d = f_2[1](x) = 1$$

$$d = f_2[2](x) = 1 + (1 - x)^1 (1/2) = 1.5 - .5x$$

$$d = f_2[3](x) = 1 + (1 - x)^1 (1/2) + (1 - x)^2 [(1/2) - (1/2^3)]$$

$$= 1.875 - 1.25x + .375x^2$$

$$d = f_2[4](x) = 1 + (1 - x)^1 (1/2) + (1 - x)^2 [(1/2) - (1/2^3)]$$

$$+ (1 - x)^3[(1/2) - (1/2^3) - (1/2^4)]$$

$$= 2.1875 - 2.1875x + 1.3125x^2 - .3125x^3$$

$$...$$

$$d = f_2[m](x) = 1 + (1 - x)^1(1/2) + (1 - x)^2[(1/2) - 1/(2^3)]$$

$$+ (1 - x)^3[(1/2) - 1/(2^3) - 1/(2^4)]$$

$$+ (1 - x)^4[(1/2) - 1/(2^3) - 1/(2^4) - 1/(2^5)]$$

$$+ ...$$

$$+ (1 - x)^{m-1}[(1/2) - 1/(2^3) - 1/(2^4) ...- 1/(2^m)]$$

for different selected convergence rates.

It will apparent to one skilled in the art that in a similar manner to that described above, this invention may be implemented by selecting a fixed convergence rate m, and utilizing different selected values for j.

In an implementation for quadratic convergence rate, wherein m = 2, $f_j[2](\Delta) = 1 + \Delta/j$, or equivalently, $f_j[m](x) = (j + 1 - x)/j$, yielding the following quadratic convergence functions for various reciprocal roots:

$$f_1[2](x) = 2 - x$$

$$f_2[2](x) = 1.5 - 0.5x$$

$$f_3[3](x) = (4/3) - (1/3)x$$

$$...$$

In an implementation for cubic convergence rates, wherein m = 3, $f_j[3](\Delta) = 1 + (\Delta/j) + \Delta^2[1 - (j - 1)/(2j)]/j$, or equivalently, $f_j[3](x) = (2j^2 + 3j + 1)/(2j)^2 - x(2j+1)/j^2 + x^2(j + 1)/(2j^2)$,
yielding the following cubic convergence functions for various reciprocal $j^{th}$ roots:

$$f_1[3](x) = 3 - 3x + x^2$$

$$f_2[3](x) = 1.875 - 1.25x + .375x^2$$

$$f_3[3](x) = (14/9) - (7/9)x + (2/9)x^2$$

$$...$$

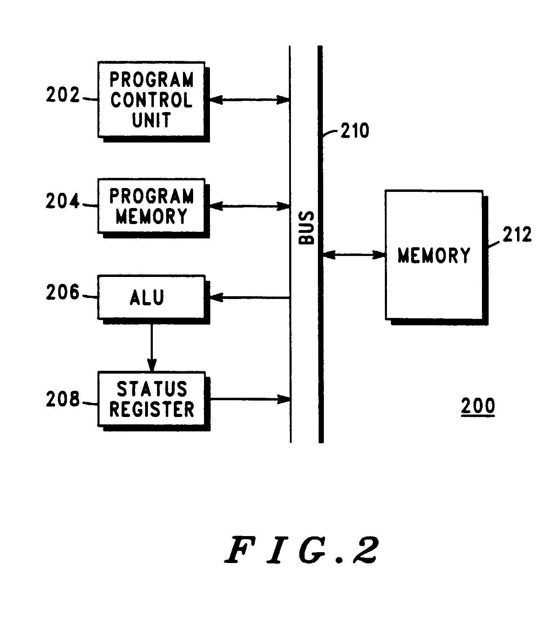

FIG. 2, generally depicted by the numeral 200, illustrates a hardware implementation of the present invention. A computer program for implementation of the present invention may be stored in the program memory ( 204), other memory (212), may be embodied in hardware in the ALU (206), or may be any combination utilizing at least two of the following: program memory, other memory, and hardware in the ALU (204, 212, 206). In one embodiment, the program control unit (202) utilizes the bus (210) to select a program to implement the present invention, and the status register (208) determines whether the selected input value is $\pm \infty$, $\pm 0$, or NaN. If the input selected input value is $\pm \infty$, $\pm 0$, or NaN, the program control unit stops processing. If the selected input value is other than $\pm \infty$, $\pm 0$, or NaN, the ALU (206) performs the previously described manipulations of values in application of the determination of an electrical output value for a reciprocal of a desired $j^{th}$ root of an input value, based on an electrical input value reflecting a desired convergence rate and an electrical input value reflecting a magnitude for a desired $j^{th}$ root. It will again be apparent to one skilled in the art that an electrical output value for an approximation of a $j^{th}$ root of a selected input may be attained by obtaining a reciprocal of the reciprocal of the approximation of the $j^{th}$ root of the selected input.

In one embodiment, to determine an initial approximation of a reciprocal of a $j^{th}$ root of a selected input, a read-only memory generates an estimate of same that is stored in 8 bits of binary memory. In another embodiment, an approximation of that reciprocal may be determined from a table of such values that is stored in program memory (204) or other memory (212).

In one embodiment the method of the invention allocates data storage and manipulation devices such that the method is executed as described above.

## Claims

1. A numeric processor for processing electrical signals to determine a reciprocal of a desired $j^{th}$ root of an input value S other than $S = \pm\infty, \pm 0$, or Not-a-Number (NaN), based on an input value m reflecting a desired convergence rate m and an input value j reflecting a magnitude of j for a desired reciprocal $j^{th}$ root, comprising:

A) first selecting means (104) for applying electrical signals responsive to the input value S to select an input value S other than $S = \pm\infty, \pm 0$, or NaN;
B) second selecting means (102) for applying electrical signals responsive to the input value j to select j;
C) third selecting means (102) for applying electrical signals responsive to the input value m to select m;
D) first determining means (108) for applying electrical signals responsive to the first selecting means and the second selecting means to determine b such that b is approximately equal to the reciprocal of the $j^{th}$ root of S;
E) second determining means (110) for applying electrical signals responsive to the second selecting means and the first determining means to determine $b^j$ such that b is raised to the power of j;
F) third determining means (112) for applying electrical signals responsive to the first selecting means and the second determining means to determine x such that $x = S * b^j$;
G) fourth determining means (114) for applying electrical signals responsive to the second selecting means, the third selecting means, and the third determining means to determine a convergence factor d such that d is obtained as a solution of an error equation $x * \{f_j[m](x)\}^j = 1 - \Delta^m$, also expressible as $(1 - \Delta) * \{f_j[m](\Delta)\}^j = 1 - \Delta^m$, noting that as $f_j[m](1 - \Delta)$ is a function of $\Delta$, then $f_j[m](\Delta)$ is also a function of $\Delta$, where:

$$\Delta = 1 - x;$$

$f_j[m](\Delta)$ is an $m-1^{th}$ order polynomial in terms of $\Delta$ that when raised to the $j^{th}$ power and multiplied by $(1 - \Delta)$ causes an error $\Delta$ to decrease by the $m^{th}$ power;

$$f_j[m](\Delta) = 1 + A_1\Delta^1 + A_2\Delta^2 + A_3\Delta^3 ... + A_{m-1}\Delta^{m-1};$$

$$0 < 1 - \Delta < 2;$$

$\{f_j[m](\Delta)\}^j$ is expanded and multiplied by $(1 - \Delta)$ as indicated;
all terms that contain $\Delta^p$ such that $p > m$ are eliminated, obtaining an equation with coefficients $g_1$ through $g_m$ of the form

$$1 + g_1\Delta^1 + g_2\Delta^2 + g_3\Delta^3 ... + g_m\Delta^m = 1 - k\Delta^m;$$

the coefficients of terms $\Delta^1, \Delta^2, \Delta^3, ..., \Delta^{m-1}$ are equated to zero yielding solutions for the $A_1$ through $A_{m-1}$ coefficients above;
$(1 - x)$ is substituted for $\Delta$ to obtain

$$f_j[m](x) = 1 + K_1x + K_2x^2 + K_3x^3 ... + K_{m-1}x^{m-1},$$

where the K's are functions of the A's;
such that convergence factor $d = f_j[m](x)$;

H) fifth determining means (116) for applying electrical signals responsive to the second selecting means and the fourth determining means to determine $d^j$ such that d is raised to the power of j;

I) sixth determining means (118) for applying electrical signals responsive to the third determining means and the fifth determining means to determine a new x such that $x = x * d^j$; and

J) seventh determining means (120) for applying electrical signals responsive to the first determining means and the fourth determining means to determine a new b such that $b = b * d$ and b appears as an output signal.

2. The apparatus of claim 1, further including data manipulation and storage means (122) responsive to the fourth determining means, the fifth determining means and the sixth determining means for iterating determinations G, H, I, and J until a solution with a desired degree of accuracy is obtained.

3. The apparatus of claim 1, wherein the means for selecting an input value S other than $S = \pm \infty, \pm 0$, or NaN is an error check device.

4. The apparatus of claim 1, wherein the first determining means (108) includes a read-only memory storage unit.

5. The apparatus of claim 1, wherein the fourth determining means (114) comprises:

A) first storage and manipulation means for applying electrical signals responsive to the fourth determining means to store and manipulate an error equation $(1 - \Delta) * \{f_j[m](\Delta)\}^j = 1 - \Delta^m$ such that

$$(1 - \Delta) * ( 1 + A_1\Delta + A_2\Delta^2 + A_3\Delta^3 ... + A_{m-1}\Delta^{m-1})^j$$

$$\approx 1 - \Delta^m ;$$

B) second storage and manipulation means for applying electrical signals responsive to the first storage and manipulation means to expand

$$(1 + A_1\Delta + A_2\Delta^2 + A_3\Delta^3 ... + A_{m-1}\Delta^{m-1})^j$$

by utilizing the binomial theorem to obtain the following product:

$$(1 - \Delta) * [1 + j(A_1\Delta + A_2\Delta^2 + A_3\Delta^3 ... + A_{m-1}\Delta^{m-1}) +$$

$$j(j-1)/2! * (A_1\Delta + A_2\Delta^2 + A_3\Delta^3 ... + A_{m-1}\Delta^{m-1})^2 +$$

$$j(j-1)(j-2)/3! * (A_1\Delta + A_2\Delta^2 + A_3\Delta^3 ... + A_{m-1}\Delta^{m-1})^3 + ...]$$

$$\approx 1 - \Delta^m ;$$

and to utilize terms less than or equal to the $\Delta^m$ term;

C) third storage and manipulation means for applying electrical signals responsive to the second storage and manipulation means to obtain the product indicated in step B and to disregard terms above $\Delta^m$, yielding an equation of the form:

$$1 + g_1\Delta^1 + g_2\Delta^2 + g_3\Delta^3 ... + g_m\Delta^m = 1 - k\Delta^m$$

where $g_1, g_2, g_3, ... g_m$ are expressions for the coefficients of the $\Delta, \Delta^2, \Delta^3, ... \Delta^m$ terms;

D) fourth storage and manipulation means for applying electrical signals responsive to the third storage and manipulation means to set the coefficients $g_1$ through and including $g_{m-1}$ equal to zero and to solve for the coefficients $A_1$ through and including $A_{m-1}$, yielding an error equation of the form $1 + g_m\Delta^m = 1 - k\Delta^m$;

E) fifth storage and manipulation means for applying electrical signals responsive to the fourth storage and manipulation means to substitute $A_1$, $A_2$, $A_3$,...$A_{m-1}$ into the m-1 th order polynomial $f_j[m](\Delta)$ to obtain

$$f_j[m](\Delta) = 1 + A_1\Delta + A_2\Delta^2 + A_3\Delta^3 ...+A_{m-1}\Delta^{m-1}$$

and to substitute $\Delta = 1 - x$ such that

$$f_j[m](x) = 1 + K_1x + K_2x^2 + K_3x^3 ...+K_{m-1}x^{m-1}$$

where K's are functions of the A's and such that $d = f_j[m](x)$, d appearing as an output signal, such that:

for convergent reciprocal such where j = 1 is desired, an application useful for division algorithms in addition to other uses, data storage and manipulation means such that non-zero terms of $f_j[m](x)$ are approximated to give

$$d = f_j[m](x)=1 + (1/j)[(1 - x)^1 + (1 - x)^2 + (1 - x)^3 ...+ (1 - x)^{m-1}]$$

with j = 1, which may be simplified to:

$$d = f_1[1](x) = 1$$

$$d = f_1[2](x) = 2 - x$$

$$d = f_1[3](x) = 3 - 3x + x^2$$

$$d = f_1[4](x) = 4 - 6x + 4x^2 - x^3$$

$$d = f_1[5](x) = 5 - 10x + 10x^2 - 5x^3 + x^4$$

$$...$$

$$d = f_1[m](x) = 1 + (1 - x)^1 + (1 - x)^2 + (1 - x)^3 ...+ (1 - x)^{m-1}$$

for different selected convergence rates;
such that:

for convergent reciprocal square root where j = 2 is desired, an application useful for square root algorithms in addition to other uses, data storage and manipulation means such that non-zero terms of $f_j[m](x)$ are approximated to give

$$d = f_j[m](x) = 1 + (1-x)^1(1/j) + (1 - x)^2[(1/j) - (j-1)/(2j^2)]$$

$$+ (1 - x)^3[(1/j) - (j-1)/(2j^2) - (j-1)/(2j^3)]$$

$$+ (1 - x)^4[(1/j) - (j-1)/(2j^2) - (j-1)/(2j^3) - (j-1)/(2j^4)]$$

$$+...$$

$$+ (1 - x)^{m-1}[(1/j) - (j-1)/(2j^2) - (j-1)/(2j^3) ...-(j-1)/(2j^{m-1})]$$

with j = 2, which may be simplified to:

$$d = f_2[1](x) = 1$$

$$d = f_2[2](x) = 1 + (1 - x)^1(1/2) = 1.5 - .5x$$

$$d = f_2[3](x) = 1 + (1 - x)^1(1/2) + (1 - x)^2[(1/2) - (1/2^3)]$$

$$= 1.875 - 1.25x + .375x^2$$

$$d = f_2[4](x) = 1 + (1 - x)^1(1/2) + (1 - x)^2[(1/2) -(1/2^3)]$$

$$+ (1 - x)^3[(1/2) - (1/2^3) - (1/2^4)]$$

$$= 2.1875 - 2.1875x + 1.3125x^2 - .3125x^3$$

$$...$$

$$d= f_2[m](x) = 1 + (1- x)^1(1/2) + (1 - x)^2[(1/2) - 1/(2^3)]$$

$$+ (1 - x)^3[(1/2) - 1/(2^3) - 1/(2^4)]$$

$$+ (1 - x)^4[(1/2) - 1/(2^3) - 1/(2^4) - 1/(2^5)]$$

$$+ ...$$

$$+ (1 - x)^{m-1}[(1/2) - 1/(2^3) - 1/(2^4) ...- 1/(2^m)]$$

for different selected convergence rates;
such that:

for quadratic convergence rate, wherein m = 2, data storage and manipulation means such that non-zero terms of $f_j[m](x)$ are approximated to give $f_j[2](\Delta) = 1 + \Delta/j$, or equivalently,

$f_j[m](x) = (j + 1 - x)/j$, yielding the following quadratic convergence functions for various reciprocal roots:

$$f_1[2](x) = 2 - x$$

$$f_2[2](x) = 1.5 - 0.5x$$

$$f_3[3](x) = (4/3) - (1/3)x$$

$$... ;$$

and
such that:

for cubic convergence rates, wherein m = 3, data storage and manipulation means such that non-zero terms of $f_j[m](x)$ are approximated to give $f_j[3](\Delta) = 1 + (\Delta/j) +$
$\Delta^2[1 - (j - 1)/(2j)]/j$, or equivalently,

$f_j[3](x) = (2j^2 + 3j + 1)/(2j)^2 - x(2j+1 )/j^2 + x^2(j + 1 )/(2j^2)$,

yielding the following cubic convergence functions for various reciprocal $j^{th}$ roots:

$$f_1[3](x) = 3 - 3x + x^2$$

$$f_2[3](x) = 1.875 - 1.25x + .375x^2$$

$$f_3[3](x) = (14/9) - (7/9)x + (2/9)x^2$$

$$\dots \,.$$

6. A method for utilizing electrical signals to allocate data storage means and data manipulation means of a computer program stored within a computer storage medium so as to expedite and improve a process of determining a reciprocal of a desired jth root of an input value S other than S = $\pm \infty$, $\pm 0$, or Not-a-Number (NaN), based on an input value m reflecting a desired convergence rate m and an input value j reflecting a magnitude of j for a desired $j^{th}$ root that substantially determine a convergence factor d, comprising the steps of:

> A) allocating one or more data and manipulation input devices for selecting and storing an input value S other than S = $\pm \infty$, $\pm 0$, or NaN (102, 104);
> B) allocating one or more data input devices for storing a desired value of j (102);
> C) allocating one or more data input devices for storing a desired value of m (102);
> D) allocating one or more data manipulation and storage devices for determining b such that b ≈ reciprocal of the $j^{th}$ root of S (108);
> E) allocating one or more data manipulation and storage devices for determining $b^j$ such that b is raised to the power of j (110);
> F) allocating one or more data manipulation devices for determining x such that x = S * $b^j$(112);
> G) allocating one or more data manipulation and storage devices for determining d (114) such that d = $f_j[m]$ (x) wherein:
> $f_j[m](x) = 1 + A_1x + A_2x^2 + A_3x^3 \dots + A_{m-1}x^{m-1}$ represents a m-1$^{th}$ polynomial that is an approximate solution of an error equation x * $\{f_j[m](x)\}^j = 1 - \Delta^m$ ;

$$\Delta = 1 - x, \text{ where } 0 < x < 2;$$

> upon substitution of 1 - $\Delta$ in place of x, expansion of $f_j[m](x)$, now represented as $f_j[m](\Delta)$, multiplication by (1 - $\Delta$), elimination of all terms that contain $\Delta^p$ such that p > m to obtain an equation of the form

$$1 + g_1\Delta^1 + g_2\Delta^2 + g_3\Delta^3 \dots + g_m\Delta^m = 1 - k\Delta^m$$

> where $g_1$, $g_2$, $g_3$,...$g_m$ are expressions for the coefficients of the $\Delta$, $\Delta^2$, $\Delta^3$,...$\Delta^m$ terms, setting the coefficients $g_1$ through and including $g_{m-1}$ equal to zero to obtain solutions for $A_1$ through and including $A_{m-1}$, substituting (1 - x) in place of $\Delta$ to obtain and equation of the form

$$f_j[m](x) = 1 + K_1x + K_2x^2 + K_3x^3 \dots + K_{m-1}x^{m-1},$$

> such that convergence factor d = $f_j[m](x)$;
> H) allocating one or more data input and manipulation devices for determining $d^j$ such that d is raised to the power of j (116);
> I) allocating one or more data input and manipulation devices for determining a new x such that x = x * $d^j$ (118) ; and
> J) allocating one or more data input and manipulation devices for determining a new b (120) such that b = b * d that appears as an output electrical signal.

7. The method of claim 6, further including data manipulation and storage devices for iterating steps G, H, I and J until a solution with a desired degree of accuracy is obtained as an electrical output signal.

**Patentansprüche**

1. Numerischer Prozessor zur Verarbeitung elektrischer Signale, um einen Reziprokwert einer gesuchten j-ten Wurzel eines Eingabewerts S, ungleich S=±∞, ±0 oder Keine Zahl (NaN), ausgehend von einem Eingabewert m, der eine gewünschte Konvergenzrate m widerspiegelt, und einem Eingabewert j, der eine Größe von j für eine gewünschte reziproke j-te Wurzel widerspiegelt, zu bestimmen, der umfaßt:

A) eine erste Auswahlstufe (104) zum Anlegen elektrischer Signale, die von dem Eingabewert S abhängen, um einen Eingabewert auszuwählen, der anders ist als S=±∞, ±0 oder Keine Zahl (NaN);

B) eine zweite Auswahlstufe (102) zum Anlegen elektrischer Signale, die von dem Eingabewert j abhängen, um j auszuwählen;

C) eine dritte Auswahlstufe (102) zum Anlegen elektrischer Signale, die von dem Eingabewert m abhängen, um m auszuwählen;

D) eine erste Rechenstufe (108) zum Anlegen elektrischer Signale, die von der ersten Auswahlstufe und zweiten Auswahlstufe abhängen, um b so zu bestimmen, daß b ungefähr gleich dem Reziprokwert der j-ten Wurzel von S ist.

E) eine zweite Rechenstufe (110) zum Anlegen von elektrischen Signalen, die von der zweiten Auswahlstufe und der ersten Rechenstufe abhängen, um $b_j$ so zu bestimmen, daß die j-te Potenz von b gebildet wird.

F) eine dritte Rechenstufe (112) zum Anlegen von elektrischen Signalen, die von der ersten Auswahlstufe und der zweiten Rechenstufe abhängen, um x zu bestimmen, so daß $x = S * b^j$;

G) eine vierte Rechenstufe (114) zum Anlegen von elektrischen Signalen, die von der zweiten Auswahlstufe, der dritten Auswahlstufe und der dritten Rechenstufe abhängen, um einen Konvergenzfaktor d zu berechnen, so daß sich d als Lösung einer Fehlergleichung x * { $f_j$[ m] (x)} j = 1 - $\Delta^m$ ergibt, was ebenso ausgedrückt werden kann als
(1 - $\Delta$) * { $f_j$[ m] ( $\Delta$)} $^j$ = 1 - $\Delta^m$ unter Beachtung, daß, wenn $f_j$[m] (1 - $\Delta$) eine Funktion von $\Delta$ ist, dann auch $f_j$[m] ($\Delta$) eine Funktion von $\Delta$ ist, wobei:

$$\Delta = 1 - x;$$

$f_j$[m] ( $\Delta$) ein Polynom (m - 1)-ter Ordnung in $\Delta$-Gliedern ist, das beim Bilden der j-ten Potenz und Multiplikation mit (1 - $\Delta$) einen Fehler $\Delta$ bewirkt, der mit der m-ten Potenz abnimmt,

$$f_j[m] ( \Delta) = 1 + A_1\Delta^1 + A_2\Delta^2 + A_3\Delta^3 ... + A_{m-1}\Delta^{m-1}$$

$$0 < 1 - \Delta < 2;$$

{$f_j$[m] ( $\Delta$)}$^j$ entwickelt wird und wie bezeichnet mit (1-$\Delta$) multipliziert wird;
alle Glieder, die $\Delta^p$ enthalten mit p > m entfernt werden, woraus sich eine Gleichung mit Koeffizienten $g_1$ bis $g_m$ der Form

$$1 + g_1\Delta^1 + g_2\Delta^2 + g_3\Delta^3 ... + g_m\Delta^m = 1 - k\Delta^m$$

ergibt,
die Koeffizienten der Glieder $\Delta^1$, $\Delta^2$, $\Delta^3$,..., $\Delta^{m-1}$ gleich Null gesetzt werden, woraus sich Lösungen für die obigen Koeffizienten $A_1$ bis $A_{m-1}$ ergeben;
(1-x) statt $\Delta$ eingesetzt wird, um

$$f_j[m]\,(x) = 1 + K_1 x + K_2 x^2 + K_3 x^3 \ldots + K_{m-1} x^{m-1}$$

zu erhalten, wobei die Ks jeweils eine Funktion von den As sind,
so daß der Konvergenzfaktor $d = f_j[m]\,(x)$ wird;

H) eine fünfte Rechenstufe (116) zum Anlegen von elektrischen Signalen, die von der zweiten Auswahlstufe und der vierten Rechenstufe abhängen, um $d^j$ zu berechenen, indem die j-te Potenz von d gebildet wird;

I) eine sechste Rechenstufe (118) zum Anlegen von elektrischen Signalen, die von der dritten Rechenstufe und der fünften Rechenstufe abhängen, um ein neues x zu berechenen, so daß $x = x * d^j$; und

J) eine siebte Rechenstufe (120) zum Anlegen von elektrischen Signalen, die von der ersten Rechenstufe und der vierten Rechenstufe abhängen, um ein neues b zu berechenen, so daß $b = b * d$ ist und b als Ausgabesignal erscheint.

2. Vorrichtung nach Anspruch 1, die außerdem Datenverarbeitungs- und Speicherstufen enthält (122), die von der vierten Rechenstufe, der fünften Rechenstufe und der sechsten Rechenstufe abhängen, um die Rechnungen G, H, I, J zu wiederholen, bis eine Lösung mit einem gewünschten Genauigkeitsgrad erreicht ist.

3. Vorrichtung nach Anspruch 1, bei der die Stufe zur Auswahl eines Eingabewerts S, der sich unterscheidet von $S=\pm\infty$, $\pm 0$ oder Keine Zahl (NaN), eine Fehlertestvorrichtung ist.

4. Vorrichtung nach Anspruch 1, bei der die erste Rechenstufe (108) eine Festspeichervorrichtung enthält.

5. Vorrichtung nach Anspruch 1, bei der die vierte Rechenstufe (114) aufweist:

A) eine erste Speicher- und Verarbeitungsstufe zum Anlegen elektrischer Signale, die von der vierten Rechenstufe abhängen, um eine Fehlergleichung $(1-\Delta) * \{f_j[m]\,(\Delta)\}^j = 1 - \Delta^m$ zu speichern und zu verarbeiten, so daß

$$(1 - \Delta) * ( 1 + A_1\Delta + A_2\Delta^2 + A_3\Delta^3 \ldots + A_{m-1}\Delta^{m-1})^j = 1 - \Delta^m;$$

B) eine zweite Speicher- und Verarbeitungsstufe zum Anlegen elektrischer Signale, die von den ersten Speicher- und Verarbeitungsstufen abhängen, um

$$(1 + A_1\Delta + A_2\Delta^2 + A_3\Delta^3 \ldots + A_{m-1}\Delta^{m-1})^j$$

unter Verwendung des Binomialtheorems zu entwickeln, um das folgende Ergebnis zu erhalten:

$$(1 - \Delta) * [1 + j * (A_1\Delta + A_2\Delta^2 + A_3\Delta^3 \ldots + A_{m-1}\Delta^{m-1}) +$$

$$j(j-1)/2! * (A_1\Delta + A_2\Delta^2 + A_3\Delta^3 \ldots + A_{m-1}\Delta^{m-1})^2 +$$

$$j\,(j-1)\,(j-2)/3! * (A_1\Delta + A_2\Delta^2 + A_3\Delta^3 \ldots + A_{m-1}\Delta^{m-1})^3 +$$

$$\ldots]$$

$$= 1 - \Delta^m$$

und um Glieder zu verwenden, die kleiner oder gleich als das $\Delta^m$-Glied sind;

C) eine dritte Speicher- und Verarbeitungsstufe zum Anlegen von elektrischen Signalen, die von der zweiten Speicher- und Verarbeitungsstufe abhängen, um das in Abschnitt B beschriebene Ergebnis zu ermitteln und Glieder höher als $\Delta^m$ zu vernachlässigen, woraus sich eine Gleichung der Form

$$1 + g_1\Delta^1 + g_2\Delta^2 + g_3\Delta^3 \ldots + g_m\Delta^m = 1 - k\Delta^m$$

ergibt, worin $g_1$, $g_2$, $g_3$, ... , $g_m$ Platzhalter für die Koeffizienten der $\Delta$, $\Delta^2$, $\Delta^3$ , ... , $\Delta^m$ Glieder sind;

D) eine vierte Speicher- und Verarbeitungsstufe zum Anlegen von elektrischen Signalen, die von der dritten Speicher- und Verarbeitungsstufe abhängen, um die Koeffizienten $g_1$ bis einschließlich $g_{m-1}$ gleich Null zu setzen, und nach den Koeffizienten A1 bis einschließlich $A_{m-1}$ aufzulösen, woraus sich eine Fehlergleichung in der Form: $1 + g_m\Delta^m = 1 - k\Delta^m$ ergibt;

E) eine fünfte Speicher- und Verarbeitungsstufe zum Anlegen elektrischer Signale, die von der vierten Speicher- und Verarbeitungsstufe abhängen, um $A_1$, $A_2$, $A_3$,... $A_{m-1}$ in dem Polynom $f_j[m]$ ($\Delta$) m-1 -ter Ordnung zu ersetzen, und so

$$f_j[m] (\Delta) = 1 + A_1\Delta + A_2\Delta^2 + A_3\Delta^3 \ldots + A_{m-1}\Delta^{m-1}$$

zu ermitteln und $\Delta = 1 - x$ einzusetzen, so daß

$$f_j[m] (x) = 1 + K_1 x + K_2 x^2 + K_3 x^3 \ldots + K_{m-1} x^{m-1},$$

wobei die Ks Funktionen der As sind und so dafl $d = f_j[m]$ (x) als Ausgangssignal d erscheint,
so daß:
für den konvergenten Reziprokwert, bei dem j = 1 gewünscht wird, eine Anwendung, die unter anderem für Divisionsalgorithmen nützlich ist, Datenspeicherungs- und Verarbeitungsstufen die Glieder von $f_j[m]$ (x), die nicht Null sind, genähert werden, um

$$d = f_j[m] (x) = 1 + (1/j)[ (1-x)^1 + (1-x)^2 + (1-x)^3 \ldots +$$

$$(1-x)^{m-1}]$$

zu erhalten, wobei j = 1, was vereinfacht werden kann zu:

$$d = f_1[1] (x) = 1$$

$$d = f_1[2] (x) = 2 - x$$

$$d = f_1[3] (x) = 3 - 3x + x^2$$

$$d = f_1[4] (x) = 4 - 6x + 4x^2 - x^3$$

$$d = f_1[5] (x) = 5 - 10x + 10x^2 - 5x^3 + x^4$$

$$\ldots$$

$$d = f_1[m] (x) = 1 + (1-x)^1 + (1-x)^2 + (1-x)^3 \ldots + (1-x)^{m-1}$$

für verschiedene, gewählte Konvergenzraten,

so daß:

für eine konvergente, reziproke Quadratwurzel, bei der j = 2 gewünscht wird, eine Anwendung, die unter anderem für Quadratwurzelalgorithmen nützlich ist, Datenspeicher- und verarbeitungsstufen die Glieder von $f_j[m]$ (x), die nicht Null sind, genähert werden, um

$$d = f_j[m]\ (x) = 1 + (1-x)^1(1/j) + (1-x)^2[\ (1/j) - (j-1)/(2j2)]$$

$$+ (1-x)^3[\ (1/j) - (j-1)/(2j^2) - (j-1)/(2j^3)]$$

$$+ (1-x)^4[\ (1/j) - (j-1)/(2j^2) - (j-1)/(2j^3) - (j-1)/(2j^4)]$$

$$+ ...$$

$$+ (1-x)^{m-1}[\ (1/j) - (j-1)/(2j^2) - (j-1)/(2j^3)... (j-1)\ (2j^{m-1})]$$

zu erhalten, wobei j =2, was vereinfacht werden kann zu:

$$d = f_2[1]\ (x) = 1$$

$$d = f_2[2]\ (x) = 1 + (1-x)^1(1/2) = 1.5 - .5x$$

$$d = f_2[3]\ (x) = 1 + (1-x)^1(1/2) + (1-x)^2[\ (1/2) - (1/2^3)] =$$

$$1.875 - 1.25x + .375x^2$$

$$d = f_2[\ 4]\ (x) = 1 + (1-x)^1(1/2) + (1-x)^2[\ (1/2) - (1/2^3)] +$$

$$(1-x)^3[\ (1/2)-(1/23)- (1/24)]$$

$$=2.1875 - 2.1875x + 1.3125x^2 - .3125x^3$$

$$...$$

$$d = f_2[\ m]\ (x) = 1 + (1-x)^1(1/2) + (1-x)^2[\ (1/2) - (1/2^3)] +$$

$$(1-x)^3[\ (1/2)-(1/2^3)-(1/2^4)] + (1-x)^4[\ (1/2)-(1/2^3)-(1/2^4)-$$

$$(1/2^5)] + ... + (1-x)^{m-1}[\ (1/2) - (1/2^3) - (1/2^4) ... -$$

$$1/(2^m)]$$

für verschiedene ausgewählte Konvergenzraten,
so daß:
für eine quadratische Konvergenzrate, bei der

$$m = 2, f_j[\ 2]\ (\ \Delta) = 1 + \Delta/j,$$

oder äquivalent,

$$f_j[m] (x) = (j + 1 -x)/j,$$

sich die folgenden quadratischen Konvergenzfunktionen für verschieden reziproke Wurzeln ergeben:

$$f_1[2] (x) = 2 - x$$

$$f_2[2] (x) = 1.5 - 0.5x$$

$$f_3[2] (x) = (4/3) - (1/3)x$$

$$...,$$

und
so daß:
für kubische Konvergenzraten, wobei m = 3, Datenspeicher und Verarbeitungsstufen die Glieder von $f_j[m] (x)$, die nicht Null sind, genähert werden können, um

$$f_j[3] (\Delta) = 1 + (\Delta/j) + \Delta^2[1- (j-1)/(2j)]/j,$$

zu ergeben oder äquivalent

$$f_j[3] (x) = (2j^2 + 3j + 1)/(2j)2 - x(2j+1)/j^2 +$$

$$x^2 (j+1) /(2j^2),$$

woraus sich die folgenden kubischen Konvergenzfunktionen für verschiedene reziproke j-te Wurzeln ergeben:

$$f_1[3] (x) = 3 - 3x + x^2$$

$$f_2[3] (x) = 1.875 - 1.25x + .375x^2$$

$$f_3[3] (x) = (14/9) - (7/9)x + (2/9)x^2$$

$$... .$$

6. Verfahren zur Verwendung von elektrischen Signalen, um Datenspeicherstufen und Datenverarbeitungsstufen eines Computerprogramms zuzuordnen, das in einem Computerspeichermedium abgelegt ist, um einen Ablauf zur Bestimmung eines Reziprokwerts einer gesuchten j-ten Wurzel eines Eingabewertes S ungleich S = ±∞, ±0, oder Keine Zahl (NaN) zu beschleunigen und zu verbessern, das, von einem Eingabewert m, der eine gewünschte Konvergenzrate m widerspiegelt, und einem Eingabewert j abhängt, der eine Größe von j für die gewünschte j-te Wurzel widerspiegelt, wodurch im wesentlichen ein Konvergenzfaktor d festgelegt wird, das die Schritte aufweist:

A) Zuordnen eines oder mehrerer Daten- und Verarbeitungseingabegeräte zum Auswählen und Speichern eines Eingabewertes S, der ungleich S = ±∞, ±0 oder keine Zahl (NaN) ist (102, 104),

B) Zuordnen eines oder mehrerer Dateneingabegeräte zum Abspeichern des gewünschten Wertes von j (102),

C) Zuordnen eines oder mehrerer Dateneingabegeräte zum Abspeichern des gewünschten Wertes von m (102),

D) Zuordnen eines oder mehrerer Datenverarbeitungs- und Speichergeräte zum Bestimmen von b, so daß b = dem Reziprokwert der j-ten Wurzel von S (108) ist,

E) Zuordnen eines oder mehrerer Datenverarbeitungs- und Speichergeräte, zum Bestimmen von $b^j$, so daß die j-te Potenz von b gebildet wird (110),

F) Zuordnen eines oder mehrerer Datenverarbeitungsgeräte zum Bestimmen von x, so daß $x = S \ast b^j$ (112),

G) Zuordnen eines oder mehrerer Datenverarbeitungs- und Speichergeräte zum Bestimmen von d (114), so daß

$$d = f_j[m] (x),$$

wobei:

$$f_j[m] (x) = 1 + A_1 x + A_2 x^2 + A_3 x^3 \ldots + A_{m-1} x^{m-1}$$

ein Polynom (m-1) -ten Grades darstellt, das eine Näherungslösung einer Fehlergleichung

$$x \ast \{f_j[m] (x)\}^j = 1 - \Delta^m; \Delta = 1 - x, \text{ mit } 0 < x < 2;$$

ist, wobei nach dem Ersetzen von x durch $1 - \Delta$ die Entwicklung von $f_j[m] \{x\}$, nun als $f_j[m] (\Delta)$ dargestellt, Multiplikation mit $(1 - \Delta)$ und Entfernen aller Glieder mit $\Delta^p$ wobei $p > m$, sich eine Gleichung der Form

$$1 + g_1 \Delta^1 + g_2 \Delta^2 + g_3 \Delta^3 \ldots + g_m \Delta^m = 1 - k \Delta^m$$

ergibt, wobei $g_1$, $g_2$, $g_3, \ldots g_m$ Platzhalter für die Koeffizienten der Glieder $\Delta^1$, $\Delta^2$, $\Delta^3$, $\ldots$, $\Delta^m$ sind, Einsetzen der Koeffizienten $g_1$ bis einschließlich $g_{m-1}$, um Lösungen für die Koeffizienten $A_1$ bis einschließlich $A_{m-1}$ zu erhalten, Ersetzen von $\Delta$ durch $(1 - x)$, um eine Gleichung in der Form

$$f_j[m] (x) = 1 + K_1 x + K_2 x^2 + K_3 x^3 \ldots + K_{m-1} x^{m-1}$$

zu erhalten, so daß der Konvergenzfaktor

$$d = f_j[m] (x)$$

ist,

H) Zuordnen von einer oder mehrerer Dateneingabe- und Verarbeitungsgeräten zum Bestimmen von $d^j$, so daß die j-te Potenz von d gebildet wird (116);

I) Zuordnen von einer oder mehrerer Dateneingabe- und Verarbeitungsgeräten zum Bestimmen eines neuen x, so daß

$$x = x \ast d^j \ (118);$$

und

J) Zuordnen von einer oder mehrerer Dateneingabe und Verarbeitungsgeräten zum Bestimmen eines neuen b (120), so daß

$$b = b * d$$

und daß b als Ausgabesignal erscheint.

7. Verfahren nach Anspruch 6, das weiterhin Datenverarbeitungs- und Speichergeräte umfaßt, um die Schritte G, H, I und J zu wiederholen, bis als elektrisches Ausgabesignal ein Ergebnis mit dem gewünschten Genauigkeitsgrad erreicht wird.

## Revendications

1. Processeur numérique permettant de traiter des signaux électriques afin de déterminer l'inverse d'une racine j-ième souhaitée d'une valeur d'entrée S autre que $\pm \infty$, $\pm 0$, ou un non-nombre (NaN), en fonction d'une valeur d'entrée m correspondant à une rapidité de convergence souhaitée m et d'une valeur d'entrée j correspondant à la grandeur de j pour une racine j-ième souhaitée, comprenant :

A) un premier moyen de sélection (104) permettant d'appliquer des signaux électriques sensible à la valeur d'entrée S pour sélectionner une valeur d'entrée S autre que $s = \pm \infty$, $\pm 0$, ou NaN ;
B) un deuxième moyen de sélection (102) permettant d'appliquer des signaux électriques sensible à la valeur d'entrée j pour sélectionner j ;
C) un troisième moyen de sélection (102) permettant d'appliquer des signaux électriques sensible à la valeur d'entrée m pour sélectionner m ;
D) un premier moyen de détermination (108) permettant d'appliquer des signaux électriques sensible au premier moyen de sélection et au deuxième moyen de sélection pour déterminer b de sorte que b est sensiblement égal à l'inverse de la racine j-ième de S ;
E) un deuxième moyen de détermination (110) permettant d'appliquer des signaux électriques sensible au deuxième moyen de sélection et au premier moyen de détermination pour déterminer $b^j$ de sorte que b est élevé à la puissance j-ième ;
F) un troisième moyen de détermination (112) permettant d'appliquer des signaux électriques sensible au premier moyen de sélection et au deuxième moyen de détermination pour déterminer x de sorte que $x = S * b^j$ ;
G) un quatrième moyen de détermination (114) permettant d'appliquer des signaux électriques sensible au deuxième moyen de sélection, au troisième moyen de sélection et au troisième moyen de détermination pour déterminer un facteur de convergence d, d étant obtenu en tant que solution à une équation d'erreur $x * \{f_j[m](x)\}^j = 1 - \Delta^m$, également exprimable sous forme de
$(1 - \Delta) * \{f_j[m](x)\}^j = 1 - \Delta^m$, en notant que, du fait que $f_j[m](1 - \Delta)$ est fonction de $\Delta$, $f_j[m](\Delta)$ est également fonction de $\Delta$, où :

$$\Delta = 1 - x ;$$

$f_j[m](\Delta)$ est un polynôme d'ordre m-1$^{ième}$ fonction de $\Delta$ qui, lorsqu'il est élevé à la puissance j-ième et multiplié par $(1 - \Delta)$, provoque une diminution de puissance m-ième d'une erreur $\Delta$ ;

$$f_j[m](\Delta) = 1 + A_1\Delta^1 + A_2\Delta^2 + A_3\Delta^3 + \dots A_{m-1}\Delta^{m-1} ;$$

$$0 < 1 - \Delta < 2 ;$$

$\{f_j[m](x)\}^j$ est développé et multiplié par $(1 - \Delta)$ tel qu'indiqué ;
tous les termes contenant $\Delta^P$ de sorte que $p > m$ sont éliminés et on obtient une équation ayant des coefficients $g_1$ à $g_m$ sous la forme

$$1 + g_1\Delta^1 + g_2\Delta^2 + g_3\Delta^3 \dots + g_m\Delta^m = 1 - k\Delta^m ;$$

les coefficients des termes $\Delta^1$, $\Delta^2$, $\Delta^3$, ..., $\Delta^{m-1}$ sont égalés à zéro, ce qui donne des solutions pour les coefficients $A_1$ à $A_{m-1}$ ci-dessus ;

$\Delta$ est remplacé par $(1 - x)$ pour obtenir

$$f_j[m](x) = 1 + K_1 x + K_2 x^2 + K_3 x^3 \ldots + K_{m-1} x^{m-1},$$

où les coefficients K sont fonction des coefficients A ;

de sorte que le facteur de convergence $d = f_j[m](x)$ ;

H) un cinquième moyen de détermination (116) permettant d'appliquer des signaux électriques sensible au deuxième moyen de sélection et au quatrième moyen de détermination pour déterminer $d^j$ de sorte que d est élevé à la puissance j-ième ;

I) un sixième moyen de détermination (118) permettant d'appliquer des signaux électriques sensible au troisième moyen de détermination et au cinquième moyen de détermination pour déterminer un nouveau x de sorte que $x = x * d^j$ ; et

J) un septième moyen de détermination (120) permettant d'appliquer des signaux électriques sensible au premier moyen de détermination et au quatrième moyen de détermination pour déterminer un nouveau b de sorte que $b = b * d$ et b apparaît comme un signal de sortie.

2. Appareil selon la revendication 1, comportant en outre un moyen de manipulation et de stockage de données (122) sensible au quatrième moyen de détermination, au cinquième moyen de détermination et au sixième moyen de détermination pour itérer les déterminations G, H, I et J jusqu'à ce qu'une solution présentant un degré de précision souhaité soit obtenue.

3. Appareil selon la revendication 1, dans lequel le moyen permettant de sélectionner une valeur d'entrée S autre que $S = \pm \infty$, $\pm 0$, ou NaN est un dispositif de contrôle d'erreurs.

4. Appareil selon la revendication 1, dans lequel le premier moyen de détermination (108) comporte une unité de stockage à mémoire à lecture seule.

5. Appareil selon la revendication 1, dans lequel le quatrième moyen de détermination (114) comprend :

A) un premier moyen de stockage et de manipulation permettant d'appliquer des signaux électriques sensible au quatrième moyen de détermination pour stocker et manipuler une équation d'erreur $(1 - \Delta) * \{f_j[m](\Delta)\}^j = 1 - \Delta^m$ de sorte que

$$(1 - \Delta) * (1 + A_1 \Delta + A_2 \Delta^2 + A_3 \Delta^3 + \ldots A_{m-1} \Delta^{m-1})^j \approx 1$$

$$- \Delta^m \, ;$$

B) un deuxième moyen de stockage et de manipulation permettant d'appliquer des signaux électriques sensible au premier moyen de stockage et de manipulation pour développer

$$(1 + A_1 \Delta + A_2 \Delta^2 + A \Delta^3 + \ldots A_{m-1} \Delta^{m-1})^j$$

en employant le binôme de Newton pour obtenir le produit suivant :

$$(1 - \Delta) * [1 + j(A_1 \Delta + A_2 \Delta^2 + A_3 \Delta^3 + \ldots A_{m-1} \Delta^{m-1}) +$$

$$j(j-1)/2! * (A_1 \Delta + A_2 \Delta^2 + A_3 \Delta^3 + \ldots A_{m-1} \Delta^{m-1})^2 +$$

$$j(j-1)(j-2)/3! * (A_1 \Delta + A_2 \Delta^2 + A_3 \Delta^3 + \ldots A_{m-1} \Delta^{m-1})^3$$

$$+ \ldots]$$

$$\approx 1 - \Delta^m \; ;$$

et pour employer des termes inférieurs ou égaux au terme $\Delta^m$ ;

C) un troisième moyen de stockage et de manipulation permettant d'appliquer des signaux électriques sensible au deuxième moyen de stockage et de manipulation pour obtenir le produit indiqué dans l'étape B et pour ignorer les termes supérieurs à $\Delta^m$, donnant une équation sous la forme :

$$1 + g_1\Delta^1 + g_2\Delta^2 + g_3\Delta^3 \, ... + g_m\Delta^m = 1 - k\Delta^m$$

où $g_1$, $g_2$, $g_3$, ... $g_m$ sont des expressions pour les coefficients des termes $\Delta^1$, $\Delta^2$, $\Delta^3$, ..., $\Delta^m$ ;

D) un quatrième moyen de stockage et de manipulation permettant d'appliquer des signaux électriques sensible au troisième moyen de stockage et de manipulation pour fixer les coefficients $g_1$ jusqu'à et y compris $g_{m-1}$ égaux à zéro et pour résoudre les coefficients $A_1$ jusqu'à et y compris $A_{m-1}$, donnant une équation d'erreur sous la forme $1 + g_m\Delta^m = 1 - k\Delta^m$ ;

E) un cinquième moyen de stockage et de manipulation permettant d'appliquer des signaux électriques sensible au quatrième moyen de stockage et de manipulation pour substituer $A_1$, $A_2$, $A_3$ ... $A_{m-1}$ dans le polynôme $f_j[m](\Delta)$ d'ordre $m-1^{\text{ième}}$ pour obtenir

$$f_j[m](\Delta) = 1 + A_1\Delta + A_2\Delta^2 + A_3\Delta^3 \, ... + A_{m-1}\Delta^{m-1}$$

et pour substituer $\Delta = 1 - x$ de sorte que

$$f_j[m](x) = 1 + K_1 x + K_2 x^2 + K_3 x^3 \, ... + K_{m-1} x^{m-1}$$

où les coefficients K sont fonction des coefficients A et de sorte que $d = f_j[m](x)$, d apparaissant comme un signal de sortie,

ainsi :

dans le cas d'un inverse convergent où $j = 1$ est souhaité, une application utile pour les algorithmes de division ainsi que pour d'autres utilisations, les termes de $f_j[m](x)$ non égaux à zéro sont approchés pour donner

$$d = f_j[m](x) = 1 + (1/j)[(1 - x)^1 + (1 - x)^2 + (1 - x)^3 \, ... + (1 - x)^{m-1}]$$

avec $j = 1$, ce qui peut être simplifié et donner :

$$d = f_1[1](x) = 1$$

$$d = f_1[2](x) = 2 - x$$

$$d = f_1[3](x) = 3 - 3x + x^2$$

$$d = f_1[4](x) = 4 - 6x + 4x^2 + x^3$$

$$d = f_1[5](x) = 5 - 10x + 10x^2 - 5x^3 + x^4$$

...

$$d = f_1[m](x) = 1 + (1 - x)^1 + (1 - x)^2 + (1 - x)^3$$

$$... + (1 - x)^{m-1}$$

pour différentes rapidités de convergence sélectionnées ;

ainsi :

dans le cas d'une racine carrée inverse convergente où $j = 2$ est souhaité, une application utile pour les algorithmes de racine carrée ainsi que pour d'autres utilisations, les termes de $f_j[m](x)$ non égaux à zéro sont approchés pour donner

$$d = f_j[m](x) = 1 + (1 - x)^1 (1/j) + (1 - x)^2 [(1/j) -$$

$$(j-1)/(2j^2)]$$

$$+ (1 - x)^3 [(1/j) - (j-1)/(2j^2) - (j-1)/(2j^3)]$$

$$+ (1 - x)^4 [(1/j) - (j-1)/(2j^2) - (j-1)/(2j^3) - (j-$$

$$1)/(2j^4)] + ...$$

$$+ (1 - x)^{m-1} [(1/j) - (j-1)/(2j^2) - (j-1)/(2j^3) ... -$$

$$(j-1)/(2j^{m-1})]$$

avec $j = 2$, ce qui peut être simplifié et donner :

$$d = f_2[1](x) = 1$$

$$d = f_2[2](x) = 1 + (1 - x)^1 (1/2) = 1{,}5 - 0{,}5x$$

$$d = f_2[3](x) = 1 + (1 - x)^1 (1/2) + (1 - x)^2 [(1/2) -$$

$$(1/2^3)]$$

$$= 1{,}875 - 1{,}25x + 0{,}375x^2$$

$$d = f_2[4](x) = 1 + (1 - x)^1 (1/2) + (1 - x)^2 [(1/2) -$$

$$(1/2^3)]$$

$$+ (1 - x)^3 [(1/2) - (1/2^3) - (1/2^4)]$$

$$= 2{,}1875 - 2{,}1875x + 1{,}3125x^2 - 0{,}3125x^3$$

$$...$$

$$d = f_2[m](x) = 1 + (1 - x)^1 (1/2) + (1 - x)^2 [(1/2) -$$

$$1/(2^3)]$$

$$+ (1 - x)^3 [(1/2) - 1/(2^3) - 1/(2^4)]$$

$$+ (1 - x)^4[(1/2) - 1/(2^3) - 1/(2^4) - 1/(2^5)]$$

$$+ \ldots$$

$$+ (1 - x)^{m-1}[(1/2) - 1/(2^3) - 1/(2^4) \ldots - 1/(2^m)]$$

pour différentes rapidités de convergence sélectionnées ;

ainsi :

dans le cas des rapidités de convergence quadratique, où m = 2, les termes de $f_j[m](x)$ non égaux à zéro sont approchés pour donner $f_j[2](\Delta) = 1 + \Delta/j$, ou de façon équivalente, $f_j[m](x) = (j + 1 - x)/j$, ce qui donne les fonctions de convergence quadratique suivantes pour différentes racines inverses :

$$f_1[2](x) = 2 - x$$

$$f_2[2](x) = 1{,}5 - 0{,}5x$$

$$f_3[3](x) = (4/3) - (1/3)x$$

$$\ldots \; ;$$

et       ainsi :

dans le cas des rapidités de convergence cubique, où m = 3, les termes de $f_j[m](x)$ non égaux à zéro sont approchés pour donner $f_j[3](\Delta) = 1 + (\Delta/j) + \Delta^2[1 - (j - 1)/(2j)]/j$, ou de façon équivalente,

$f_j[3](x) = (2j^2 + 3j + 1)/(2j)^2 - x(2j+1)/j^2 + x^2(j + 1)/(2j^2)$, ce qui donne les fonctions de convergence cubique suivantes pour différentes racines j-ième inverses :

$$f_1[3](x) = 3 - 3x + x^2$$

$$f_2[3](x) = 1{,}875 - 1{,}25x + 0{,}375x^2$$

$$f_3[3](x) = (14/9) - (7/9)x + (2/9)x^2$$

$$\ldots$$

6. Procédé permettant d'employer des signaux électriques pour allouer des moyens de stockage de données et de manipulation de données d'un programme informatique stocké dans un support de stockage d'ordinateur de façon à accélérer et perfectionner un processus de détermination de l'inverse d'une racine j-ième souhaitée d'une valeur d'entrée S autre que S = ± ∞, ± 0, ou un non-nombre (NaN), en fonction d'une valeur d'entrée m correspondant à une rapidité de convergence souhaitée m et d'une valeur d'entrée j correspondant à la grandeur de j pour une racine j-ième souhaitée qui détermine sensiblement un facteur de convergence d, comprenant les étapes suivantes :

A) allouer un ou plusieurs dispositifs d'entrée et de manipulation de données pour sélectionner et stocker une valeur d'entrée S autre que S = ± ∞, ± 0, ou NaN (102, 104) ;

B) allouer un ou plusieurs dispositifs d'entrée de données pour stocker une valeur souhaitée de j (102) ;

C) allouer un ou plusieurs dispositifs d'entrée de données pour stocker une valeur souhaitée de m (102) ;

D) allouer un ou plusieurs dispositifs de manipulation et de stockage de données pour déterminer b de sorte que b est sensiblement égal à l'inverse de la racine j-ième de S (108) ;

E) allouer un ou plusieurs dispositifs de manipulation et de stockage de données pour déterminer $b^j$ de sorte que b est élevé à la puissance j-ième (l10) ;

F) allouer un ou plusieurs dispositifs de manipulation de données pour déterminer x de sorte que $x = S * b^j$

(112) ;

G) allouer un ou plusieurs dispositifs de manipulation et de stockage de données pour déterminer d (114) de sorte que d = $f_j[m](x)$, où :

$$f_j[m](x) = 1 + A_1 x + A_2 x^2 + A_3 x^3 + \dots A_{m-1} x^{m-1}$$

représente un polynôme m-1$^{\text{ième}}$ qui est une solution approchée d'une équation d'erreur $x * \{f_j[m](x)\}^j = 1 - \Delta^m$ ;

$$\Delta = 1 - x, \text{ où } 0 < x < 2 \text{ ;}$$

suite au remplacement de x par 1 - $\Delta$, aux développement de $f_j[m](x)$, représenté à présent par $f_j[m](\Delta)$, à la multiplication par (1 - $\Delta$), et à l'élimination de tous les termes contenant $\Delta P$ de sorte que p > m, on obtient une équation sous la forme

$$1 + g_1 \Delta^1 + g_2 \Delta^2 + g_3 \Delta^3 \dots + g_m \Delta^m = 1 - k\Delta^m$$

où $g_1$, $g_2$, $g_3$, ... $g_m$ sont des expressions pour les coefficients des termes $\Delta^1$, $\Delta^2$, $\Delta^3$, ..., $\Delta^{m-1}$ ; les coefficients $g_1$ jusqu'à et y compris $g_{m-1}$ sont fixés égaux à zéro pour obtenir des solutions pour $A_1$ jusqu'à et y compris $A_{m-1}$ ; $\Delta$ est remplacé par (1 - x) pour obtenir une équation sous la forme

$$f_j[m](x) = 1 + K_1 x + K_2 x^2 + K_3 x^3 \dots + K_{m-1} x^{m-1},$$

de sorte que le facteur de convergence d = $f_j[m](x)$;

H) allouer un ou plusieurs dispositifs d'entrée et de manipulation de données pour déterminer $d^j$ de sorte que d est élevé à la puissance j-ième (116) ;

I) allouer un ou plusieurs dispositifs d'entrée et de manipulation de données pour déterminer un nouveau x de sorte que x = x * $d^j$ (118) ; et

J) allouer un ou plusieurs dispositifs d'entrée et de manipulation de données pour déterminer un nouveau b (120) de sorte que b = b * d et apparaît comme un signal de sortie électrique.

7. Procédé selon la revendication 6, comportant en outre des dispositifs de manipulation et de stockage de données permettant d'itérer les étapes G, H, I et J jusqu'à ce qu'une solution présentant un degré de précision souhaité soit obtenue sous forme de signal de sortie électrique.

*F I G . 1*

<u>100</u>

START

GET S,j,m — 102

104

$S = \pm\infty, \pm0, NaN$ ? — YES — ERROR CHECK — 106

NO

DETERMINE b SUCH THAT $b \approx \dfrac{1}{\sqrt[j]{S}}$ — 108

DETERMINE $b^j$ — 110

DETERMINE X SUCH THAT $X = S * b^j$ — 112

SOLVE;
$X * \{f_j[m](X)]\}^j = 1 - \Delta^m$
FOR $f_j[m](X)$
LET $d = f_j[m](X)$ — 114

DETERMINE $d^j$ — 116

DETERMINE NEW X SUCH THAT $X = X * d^j$ — 118

DETERMINE NEW b SUCH THAT $b = b * d$ — 120

122

DESIRED DEGREE OF ACCURACY REACHED ? — NO

YES

STOP

24

$FIG.2$